# EUROPEAN PATENT APPLICATION

(11) **EP 2 071 963 A1**
(43) Date of publication of application: **24.06.2009**
(21) Application number: 07123966.9
(22) Date of filing: 21.12.2007
(51) Int. Cl.: A23G 9/48

(54) **Frozen confectionery product**

(71) Applicant: Nestec S.A., 1800 Vevey (CH)
(72) Inventor: Schlup, Olivier Gaelle, 1012 Lausanne (CH); Fracheboud, Alain, 1870 Monthey (CH); Labbe, David, 1010 Lausanne (CH); Puaud, Max, 60860 Pisseleu (FR)
(74) Representative: Rupp, Christian

(57) **Abstract**

The present invention relates to frozen confectionery products having at least one ingredient which is dispersed in said frozen confectionery in a non-homogeneous fashion. The invention further relates to a method for manufacturing such frozen confectionery products.

## Description

### Field of the invention

The present invention relates to frozen confectionery products having at least one ingredient which is dispersed in said frozen confectionery in a non-homogeneous fashion. The invention further relates to a method for manufacturing such frozen confectionery products.

### Background of the invention

Traditionally, frozen confectionery products are manufactured by preparing a mix of ingredients such as milk, sweeteners, stabilisers, emulsifiers and flavourings, pasteurising and homogenising the mix prior to freezing, optionally with incorporation of air.

The initial ingredients are thus homogeneously distributed in the resulting frozen confectionery product.

It has now been found that frozen confectionery products having an alternative distribution of certain ingredients can be manufactured and provide the consumer with an alternative sensory perception when consuming the product.

### Object of the invention

The object of the present invention is thus to provide a frozen confectionery product which provides an alternative organoleptic sensation when consumed.

### Summary

This object is achieved by means of the independent claims. The dependent claims further develop the central idea of the present invention.

Thus, in a first aspect, the present invention relates to a frozen confectionery product comprising a frozen water-based matrix and optionally a coating, wherein at least one ingredient is dispersed throughout said matrix according to a continuous or stepped gradient of concentration.

In a second aspect, the present invention is concerned with a method for the manufacture of a frozen confectionery product comprising the step of:
filling a frozen mould with a liquid or viscous frozen confectionery mix comprising a mixture of ingredients, wherein the concentration of at least one ingredient varies over time during filling according to a continuous or stepped gradient.

In a further aspect, the present invention relates to a method for the manufacture of a frozen confectionery product comprising the step of:
filling a frozen mould with a liquid or viscous frozen confectionery mix comprising a mixture of ingredients, sucking back at least part of the frozen confectionery mix in order to create a void in said mould, filling said void with a second liquid or viscous frozen confectionery mix comprising at least a further ingredient and allowing the further ingredient to diffuse over time during freezing.

A method for the manufacture of a frozen confectionery product comprising the step of:
dipping a stick in a series of baths, each bath comprising a frozen confectionery mix comprising a mixture of ingredients, wherein the concentration of at least one ingredient increases or decreases continuously in each consecutive bath, also forms part of the present invention.

The present invention relates in a further aspect to a method for the manufacture of a frozen confectionery product comprising the step of filling a mould by spraying the mould with a liquid or viscous frozen confectionery mix.

Finally, products obtainable by the methods of the invention also pertain to the present invention.

### Figures

The present invention is further illustrated by means of the figures, wherein:

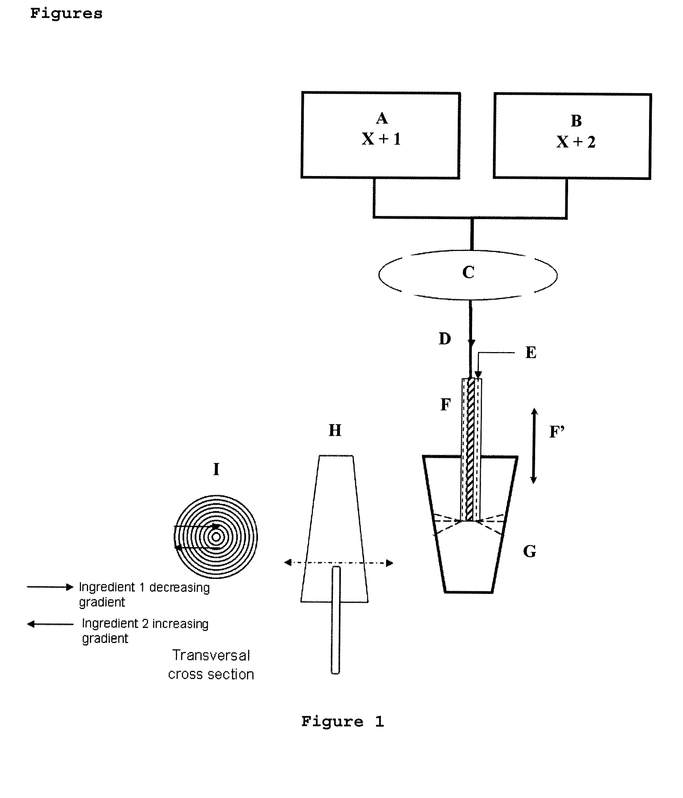

- Figure 1 is a schematic representation a system which may be used in the method of the present invention wherein two reservoirs (A) and (B) are provided, (C) is a programmable mixing chamber, (D) is an inlet for the frozen confectionery mix, (E) is an air/nitrogen inlet, and (G) is the mould receiving the product. The reservoirs (A) and (B) may be filled with a recipe (X) and further ingredients (1) and (2) respectively, while (F) represents the movement of the nozzle during filling of the mould. The resulting product (H) is characterised by concentric layers as shown in the transversal cross-section (I).

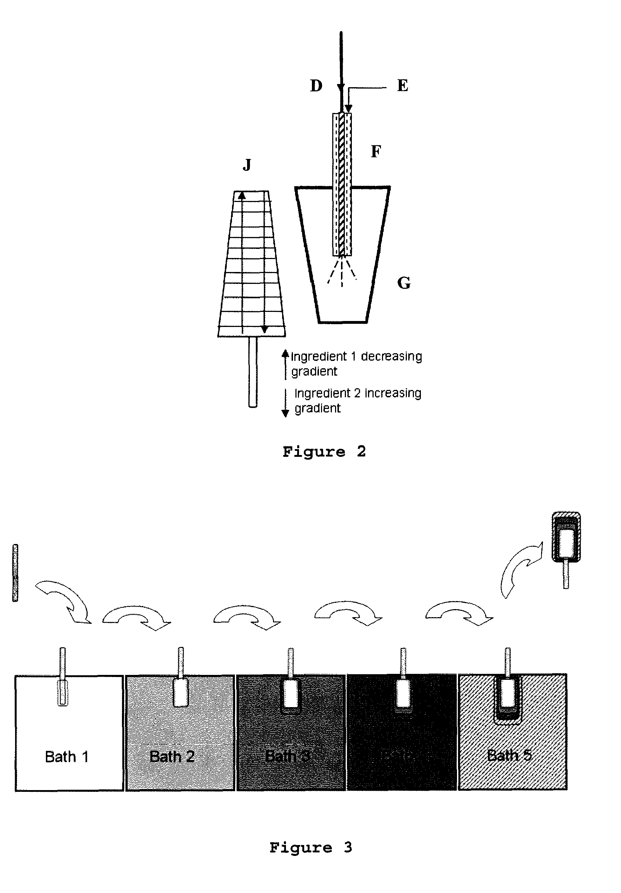

- Figure 2 is a schematic representation of an embodiment of the method, wherein the system also comprises a mix inlet (D), an air/nitrogen inlet (E) and a mould (G), but wherein the filling of the mould is carried out without movement of the nozzle up and down the mould. The resulting product (J) is characterised by horizontal layers.
- Figure 3 is a schematic representation of an embodiment of the method, wherein the system comprises successive dips in 5 bath mixes (from 1 to 5). Each bath comprises a recipe having a different concentration of at least one ingredient, the concentration of said ingredient increasing or decreasing in each consecutive bath. The successive dipping of the stick into each bath yields a multilayer products having concentric layers creating a gradient of concentrations for at least one ingredient in the final product.

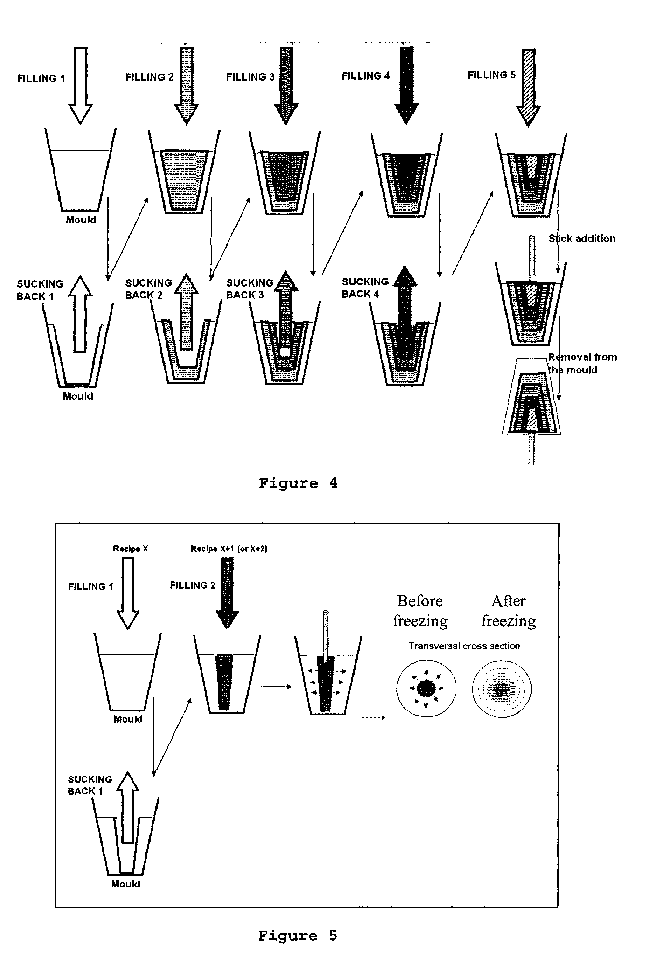

- Figure 4 is a schematic representation of an embodiment of the method with a successive filling/suck back system, wherein the filling is carried out with a mix having a varying concentration of at least one ingredient over time. The successive mould filling and sucking back of at least part of the mix leads to the formation of successive concentric layers, thus creating a gradient of concentration of at least one ingredient in the final product.
- Figure 5 is a schematic representation of an embodiment of the method consisting in filling a mould with the recipe X and then by removing the unfrozen centre part of the mix by suck back and by filling the centre part with X+1. The recipe X+1 can diffuse within X during the freezing and leads to a decreasing gradient of concentration for ingredient 1 from the centre of the product to the external part of the product.

### Detailed description of the invention

The present invention relates to a frozen confectionery product comprising a frozen water-based matrix and optionally a coating, wherein at least one ingredient is dispersed throughout said matrix according to a continuous or stepped gradient of concentration.

By "water-based matrix" is meant any traditional matrix which is used in the production of ice cream, sorbet, mellorine, water ice etc. Such matrix may thus contain a varying amount of water depending on the intended final product.

The frozen confectionery product may thus be ice cream, mellorine, sorbet, water ice. Preferably, it is a water ice.

Preferably, the frozen confectionery product is provided in the form of a single consumable portion, for example a portion of 150-200g. For instance, the frozen product may be in the form of a bar, cone or any moulded shape.

At least one ingredient in the frozen product of the invention is not homogeneously present, but dispersed according to a particular concentration gradient throughout the product. This has the advantage of providing a specific sensory pattern, which provides the frozen confectionery product with surprising organoleptic properties.

The ingredient which is dispersed according to a particular concentration gradient may be selected from any ingredient that may impact the taste, olfactory, trigeminal, textural and visual properties of the frozen confectionery product. For example, the ingredient may be a tingling agent such as that described in EP 07120825.0, a refreshing agent such as that described in EP 07120824.3. Other examples of ingredients are colourings, flavourings etc. The ingredient may be a single compound or a mixture of compounds.

In a preferred embodiment, the ingredients dispersed in the frozen confectionery product are selected from a tingling agent, a cooling agent and/or a salivating agent.

Tingling agents may be a mixture of sichuan pepper and cinnamaldehyde.

Examples of salivating agent, also called "mouth watering agent", include extracts from pepper, onion, garlic, radish, horseradish, mustard, chilli, ginger, Jambu Oleoresin or para cress *(Spilanthes sp.)* in which the active ingredient is Spilanthol, Japanese pepper extract *(Zanthoxylum peperitum),* including the ingredients known as Saanshool-I, Saanshool-II and Sanshoamide; black pepper extract *(piper nigrum),* including the active ingredients chavicine and piperine; Echinacea extract; Northern Prickly Ash extract; and red pepper oleoresin.

Cooling agents may be selected from menthol derivative compounds, acyclic and/or cyclic carboxamides, N-substituted paramenthane carboxamides, phosphine oxides, substituted p-menthanes, menthoxypropane, alpha-keto enamine derivatives, N-substituted p-menthane carboxamide, menthyl half acid ester derivatives, cubebol.

In a further preferred embodiment, the frozen confectionery product comprises a tingling agent, a cooling agent and a salivating agent dispersed throughout the product according to a concentration gradient. The salivating agent is preferably at its highest concentration in the core of said product.

In an embodiment of the present invention, the gradient of concentration of at least one ingredient is continuous throughout the frozen confectionery product. The concentration of said ingredient therefore increases or decreases continuously throughout the product. The increase or decrease in concentration may be radial, i.e. from the inside to the outside of the product. Alternatively, or in addition, it may be vertical, i.e. from the top to the bottom of the product.

In another embodiment of the invention, the ingredient may be dispersed in the frozen product according to a stepped concentration gradient. By stepped concentration gradient is meant that, throughout the product, the concentration of said ingredient increases up or decreases down to a certain point, then stagnates at said concentration over a certain distance, then increases or decreases again respectively and so on.

The frozen product may thus be made of layers, each layer comprising a specific concentration of at least one ingredient and a different concentration of said ingredient in the adjacent layers, wherein the concentration either increases or decreases throughout the product. The layers may be horizontal such that the concentration would increase or decrease vertically throughout the product. Alternatively or in addition, concentric layers could be present such that the concentration of at least one ingredient increases or decreases radially throughout the product.

Thus, the present invention also relates to multi-layered products. Preferably, the layers are concentric and/or horizontal. By "multi-layered" is meant, a product comprising at least 3 layers, preferably at least 5 layers. The product may comprise up to 150 layers. The products having concentric multi-layers have been found to exhibit an exceptionally smooth texture.

Depending on the ingredient which concentration is non-homogeneous throughout the product, the concentration increase may be visually noticeable or may be perceived only upon consumption. In a further embodiment of the invention, at least a further ingredient may be dispersed with a continuous or stepped gradient of concentration throughout said confectionery product, which gradient is different or opposite to the gradient of the first ingredient.

According to this embodiment, at least two ingredients may be dispersed non-homogeneously throughout the frozen product according to different concentration gradients. Thus, the concentration of one ingredient could be increasing from top to bottom while the concentration of a further ingredient is decreasing from top to bottom. Figures 1 and 2 show embodiments of the final products (H) and (J) having at least two ingredients dispersed non-homogeneously at an opposite concentration gradient throughout the product.

The present invention also relates in a further aspect to methods for the manufacture of a frozen confectionery product.

A method according to the present invention comprises the step of filling a frozen mould with a liquid or viscous frozen confectionery mix comprising a mixture of ingredients, wherein the concentration of at least one ingredient varies over time during filling according to a continuous or stepped gradient.

The concentration of said ingredient preferably decreases or increases over time during the filling.

In a further aspect, the filling step may be intermittently interrupted in order to such back part of the liquid or viscous frozen confectionery mix. This embodiment is illustrated in figure 4, wherein filling 1 is used to fill the mould. Part of filling 1 is then suck back according to known technology. The mould is then essentially coated with a layer of filling 1. After suck back, the mould is filled again with filling 2 and subjected to suck back, such that a layer of filling 2 is additionally formed in the mould. The process is carried out as long as desired, each filling and suck back cycle yielding a layer. The fillings differ from each other in the concentration of at least one ingredient. Preferably, the fillings differ from each other in the concentration of one additional ingredient, the frozen confectionery mix basis staying essentially unchanged. The concentration of said ingredient is thus increased or decreased in each consecutive filling. Once the filling/suck back cycles are finished, a stick is typically inserted and the final product demoulded and further processed according to standard practice. The final product thus comprises at least one ingredient which is dispersed non-homogeneously and according to a concentration gradient throughout said product.

According to another embodiment, the method for manufacture of a frozen confectionery product may comprise the step of filling a frozen mould with a liquid or viscous frozen confectionery mix comprising a mixture of ingredients, sucking back part of the liquid or viscous frozen confectionery mix in order to create a void in said mould, filling said void with a second liquid or viscous frozen confectionery mix comprising at least a further ingredient and allowing the further ingredient to diffuse over time during freezing.

This embodiment is illustrated in figure 5, wherein a frozen mould is filled with a recipe X, suck back in order to leave a void in the mould and then filling the mould with recipe X comprising a further ingredient 1. As shown in the transversal cross section of figure 5, the ingredient 1 will diffuse during freezing, such that the final product will comprise ingredient 1 dispersed according to a concentration gradient throughout said product. It is thus possible to provide a radial concentration gradient in the final products according to the present invention.

In a preferred embodiment of the present methods, the filling of the mould may be carried out by spraying. This may be done by using a filling system using an air or nitrogen atomising nozzle or any other spraying system producing a mist of frozen confectionery mix. It has been found that using such a filling system yields products having an exceptionally smooth texture. This filling system is illustrated in figures 1 and 2. Alternatively, the filling may be done by a standard filling system.

Thus, the present invention relates in an aspect to a method for the manufacture of a frozen confectionery product comprising the step of filling a mould by spraying the mould with a liquid or viscous frozen confectionery mix. Preferably, the spraying is carried out such that concentric layers are formed. The product obtainable by said method also forms part of the present invention.

In order to vary the concentration of at least one ingredient over time whilst filling the mould, a mixing chamber is preferably used which comprises frozen confectionery mix ingredients. Further ingredients are then periodically added to the chamber during filling. The addition of further ingredients may be programmed. If an increase of concentration of at least one ingredient is wished, said ingredient is added over time to the chamber during the filling process. If a decrease of concentration of at least one ingredient is wished, said ingredient is present from the start in the frozen confectionery mix, and further frozen concentration mix without said ingredient is added to the chamber over time, in order to decrease the concentration of said ingredient over time.

In a preferred embodiment of the invention as shown in figure 1, a two-channel pump with a minimum of two reservoirs (A and B) is used. The two-channel pump may be programmable and is connected to the mixing chamber (C). Thus, said reservoirs comprise a different mix of ingredients. For instance, one reservoir could comprise the frozen confectionery ingredients mix with a further ingredient (X + 1) and the other reservoir could contain the frozen confectionery ingredients mix without the further ingredient or with a different further ingredient (X or X + 2). Then, by varying the contribution of each reservoir over time to the mixing chamber, the concentration of specific ingredients varies during the product preparation.

Preferably, the mould wall is dipped in an alcohol gel bath or any other frozen bath such that when the mix is filled into the mould (G), it immediately freezes on contact with the mould. The frozen bath could be at a temperature minimum of -40°C for instance.

The present invention thus allows to produce frozen confectionery product having a non-homogeneous distribution of at least one ingredient according to a continuous or stepped gradient.

According to the filling system of the present invention, it is possible to obtain a final product with concentric layers. This may be achieved by the method illustrated in Figure 1. The nozzle (F) which is linked to the mixing chamber (C) sprays the mould (G) with the frozen confectionery mix with an up and down movement (F') such that the whole area of the mould wall is covered and the inside of the mould is filled gradually. In the embodiment illustrated in Figure 1, each reservoir comprise as well as the frozen confectionery mix, a further ingredient (ingredient 1 or ingredient 2). Using the filling system, a final frozen confectionery product is obtained which has concentric layers (H) and wherein the concentration of the further ingredients 1 and 2 increases and decreases respectively radially throughout the product.

The filling system of the invention further allows, according to an embodiment, the production of frozen confectionery product with horizontal layers. Figure 2 exemplifies an embodiment wherein the mix is filled into the mould (G) with a slow upward movement. This allows the mould to be filled gradually starting from the bottom and results in horizontal layers with varying concentrations of specific ingredients (J).

Using the filling system of the present invention, up to 150 successive concentric and/or horizontal layers may be obtained. This presents the advantage that very subtle changes in perception upon consumption can be achieved. The resulting frozen confectionery product possesses organoleptic properties which could not be achieved with standard frozen confectionery manufacturing methods.

Furthermore, the inside of the mould may be coated with a thin layer of confectionery, for example chocolate or fruit base, prior to filling it with the frozen confectionery mix. The resulting product may thus be provided with a thin confectionery coating.

Once the mix is filled into the mould, it is then further processed according to standard frozen dessert manufacturing process. Thus, a stick is typically inserted into the mould. The product is eventually demoulded, and further packaged according to standard practice.

Another way to obtain a product according to the invention is further illustrated in figure 3.

Referring to fig. 3, the method comprises the step of dipping a stick in a series of baths, each bath comprising a frozen confectionery mix comprising a mixture of ingredients, wherein the concentration of at least one ingredient increases or decreases continuously in each consecutive bath. Thus, as an example, bath 1 may comprise a frozen confectionery mix with 0.35% of a tingling agent, bath 2 may comprise 0.26% of said tingling agent, bath 3 may comprise 0.18% of said tingling agent, bath 4 may comprise 0.09% of said tingling agent and bath 5 may comprise no tingling agent.

Additionally, bath 2 may comprise 0.09% of a refreshing agent, bath 3 may comprise 0.18% of said refreshing agent, bath 4 may comprise 0.26% of said refreshing agent and bath 5 may comprise 0.35% of said refreshing agent.

Preferably, bath 1 comprises, alternatively or in addition, a salivating agent at its highest concentration compared to the concentration of salivating agent in successive baths. Thus, the resulting frozen confectionery product comprises a high concentration of salivating agent in the core of the product. The resulting sensory pattern upon consumption is particularly advantageous as it provides the consumer with a "mouth cleansing" effect at the end of consumption.

The resulting frozen confectionery product comprises several layers each having subtle variations in concentration of an ingredient. This has a positive impact on the overall organoleptic properties of said product.

A product obtainable by any of the present methods also forms part of the present invention.

The present products are thus superior to standard frozen confectionery products in that a tailored sensory profile can be achieved in an easy way, thus providing alternative sensations upon consumption.

The present invention is further illustrated herein by means of the following non-limiting examples.

### Examples

A frozen product is manufactured using two reservoirs (reservoirs A and B) comprising standard frozen confectionery mix. One reservoir (reservoir A) additionally comprises mouth watering agent at 0.35%, while the other reservoir (reservoir B) additionally comprises a cooling agent at 0.02%.

| **Ingredients** | **Amount (g) per 100g of recipe in reservoir A** | **Amount (g) per 100g of recipe in reservoir B** |
|---|---|---|
| Stabiliser | 0.25 | 0.25 |
| Colouring | 0.001 | 0.001 |
| Sugars | 20-25 | 20-25 |
| Emulsifier | 0.04 | 0.04 |
| Water | 75-80 | 75-80 |
| Peach flavouring | 0.05 | 0.05 |
| Mouth watering agent | 0.35 | 0 |
| Cooling agent | 0 | 0.02 |

The reservoirs are linked to a programmable mixing chamber which is programmed according to the table below:

| **Time** | **Reservoir A** | **Reservoir B** |
|---|---|---|
| From 0 to 1 min | 100% | 0% |
| From 1 to 2 min | 75% | 25% |
| From 2 to 3 min | 50% | 50% |
| From 3 to 4 min | 25% | 75% |
| From 4 to 5 min | 0% | 100% |

Depending on the filling method used, the resulting product has at least two ingredients dispersed according to a concentration gradient. A tailored release sensory pattern may thus be obtained upon consumption of the final product.

## Claims

1. Frozen confectionery product comprising a frozen water-based matrix and optionally a coating, wherein at least one ingredient is dispersed throughout said matrix according to a continuous or stepped gradient of concentration.

2. Frozen confectionery product according to claim 1, wherein the concentration of said ingredient increases or decreases throughout the product according to said gradient.

3. Frozen confectionery product according to claim 1 or 2, wherein the concentration of said ingredient increases or decreases radially.

4. Frozen confectionery product according to any of the preceding claims, wherein the concentration of said ingredient increases or decreases vertically.

5. Frozen confectionery product according to any of the preceding claims, wherein at least one further ingredient is dispersed with a continuous or stepped gradient of concentration throughout said frozen confectionery product, which gradient is different or opposite to the gradient of the first ingredient.

6. Frozen confectionery product according to any of the preceding claims, wherein the frozen confectionery product is a water-ice, sorbet, or ice cream.

7. Frozen confectionery product according to any of the preceding claims, which is in the form of a bar, cone or any other moulded shape.

8. Frozen confectionery product according to any of the preceding claims, wherein said ingredient is selected from any ingredient that impacts the taste, olfactory, trigeminal, textural and/or visual properties of said frozen confectionery product.

9. Frozen confectionery product according to claim 8, wherein the ingredients are selected from a tingling agent, a cooling agent and/or a salivating agent.

10. Frozen confectionery product according to claim 9, wherein the tingling agent is selected from a mixture of sichuan pepper and cinnamaldehyde.

11. Frozen confectionery product according to any of claims 9 or 10, wherein the salivating agent includes extracts from pepper, onion, garlic, radish, horseradish, mustard, chilli, ginger, Jambu Oleoresin or para cress *(Spilanthes sp.)* in which the active ingredient is Spilanthol, Japanese pepper extract (*Zanthoxylum peperitum*), including the ingredients known as Saanshool-I, Saanshool-II and Sanshoamide; black pepper extract *(piper nigrum),* including the active ingredients chavicine and pipeline; Echinacea extract; Northern Prickly Ash extract; and red pepper oleoresin and any mixtures thereof.

12. Frozen confectionery product according to any of claims 9 to 11, wherein the cooling agent is selected from menthol derivative compounds, acyclic and/or cyclic carboxamides, N-substituted paramenthane carboxamides, phosphine oxides, substituted p-menthanes, menthoxypropane, alpha-keto enamine derivatives, N-substituted p-menthane carboxamide, menthyl half acid ester derivatives, cubebol and any mixtures thereof.

13. Frozen confectionery product according to any of claims 9 to 12, which comprises a tingling agent, a cooling agent and a salivating agent, wherein the salivating agent is present at its highest concentration in the core of said product.

14. Frozen confectionery product according to any of the preceding claims, wherein the product is multi-layered.

15. Frozen confectionery product according to claim 14, wherein the layers are concentric and/or horizontal.

16. Frozen confectionery product according to claims 14 or 15, wherein each layer comprises a different concentration of at least one ingredient from the adjacent layer.

17. Method for the manufacture of a frozen confectionery product comprising the step of:
filling a frozen mould with a liquid or viscous frozen confectionery mix comprising a mixture of ingredients, wherein the concentration of at least one ingredient varies over time during filling according to a continuous or stepped gradient.

18. Method according to claim 18, wherein the concentration of said ingredient decreases or increases over time during the filling.

19. Method according to claim 18 or 19, wherein the filling step is intermittently interrupted in order to suck back part of the liquid or viscous frozen confectionery mix.

20. Method for the manufacture of a frozen confectionery product comprising the step of:
filling a frozen mould with a liquid or viscous frozen confectionery mix comprising a mixture of ingredients, sucking back part of the liquid or viscous frozen confectionery mix in order to create a void in said mould, filling said void with a second liquid or viscous frozen confectionery mix comprising at least a further ingredient and allowing the further ingredient to diffuse over time during freezing.

21. Method according to any of claims 17 to 20, wherein the filling is carried out by spraying.

22. Method according to any of claims 17 to 21, wherein the filling into the mould is made such that concentric layers are formed.

23. Method according to any of claims 17 to 22, wherein the filling into the mould is made such that horizontal layers are formed.

24. Method according to any of claims 17 to 23, wherein the mould is coated with a confectionery product prior to filling.

25. Method for the manufacture of a frozen confectionery product comprising the step of:
dipping a stick in a series of baths, each bath comprising a frozen confectionery mix comprising a mixture of ingredients, wherein the concentration of at least one ingredient increases or decreases continuously in each consecutive bath.

26. Method for the manufacture of a frozen confectionery product comprising the step of:
filling a frozen mould by spraying the mould with a liquid or viscous frozen confectionery mix.

27. Method according to claim 26, wherein the spraying is carried out such that concentric layers are formed.

28. Frozen confectionery product obtainable by the method of claims 17 to 27.

29. Frozen confectionery product which is multi-layered.
